# EUROPÄISCHE PATENTSCHRIFT

(11) **EP 0 620 246 B1**
(45) Veröffentlichungstag und Bekanntmachung des Hinweises auf die Patenterteilung: **27.01.1999**
(21) Anmeldenummer: 94105521.2
(22) Anmeldetag: 09.04.1994
(51) Int. Cl.: C08J 9/00, C08J 9/224

(54) **Formkörper aus Polystyrol-Hartschaum**
Polystyrene hard foam moulded articles
Pièces moulées en mousse de polystyrène rigide

(30) Priorität: 13.04.1993 DE 9305431 U
(43) Veröffentlichungstag der Anmeldung: 19.10.1994
(73) Patentinhaber: ALGOSTAT GmbH & CO. KG, D-29227 Celle (DE)
(72) Erfinder:
(74) Vertreter: Möller, Friedrich, Dipl.-Ing.

(56) Entgegenhaltungen:
- EP-A- 0 372 343
- DE-B- 1 173 244
- FR-A- 2 230 667
- GB-A- 916 776
- GB-A- 1 588 314
- GB-A- 2 177 024
- DATABASE WPI Week 8525, 10. Mai 1985 Derwent Publications Ltd., London, GB; AN 85-149851 & JP-A-60 082 320 (TEIJIN K. K.)
- DATABASE WPI Week 8951, 14. November 1989 Derwent Publications Ltd., London, GB; AN 89-375080 'Extreme infrared rays radioactive resin foaming body.' & JP-A-1 282 226 (JAPAN STYRENE PAPER CORPORATION)
- DATABASE WPI Week 9147, 15. Oktober 1991 Derwent Publications Ltd., London, GB; AN 91-344747 'Plastic particles radiating far IR' & JP-A-3 231 950 (ADOSUTENRESU KOBO K.)
- DATABASE WPI Week 8126, 8. Mai 1981 Derwent Publications Ltd., London, GB; AN 81-46544D 'Foamed synthetic resin adiabatic material' & JP-A-56 050 935 (MITSUBISHI PETROCHEMICAL K. K.)

## Beschreibung

Die Erfindung betrifft einen Formkörper aus Polystyrol-Partikelschaum.

Polystyrol-Hartschaum ist ein seit über 30 Jahren bewährter Dämmstoff, ohne den ein preisgünstiges, energiesparendes Bauen kaum noch denkbar ist. Gleiches gilt für andere Anwendungen von Polystyrol-Hartschaum als für Dämmzwecke.

Formkörper aus Polystyrol-Hartschaum werden durch Extrusion oder Expansion hergestellt. Die Erfindung bezieht sich auf die Herstellung solcher Formkörper durch Expansion. Dabei wird von (kleinen) Polystyrolschaum-Partikeln, insbesondere Polystyrolschaum-Perlen, ausgegangen. Die Polystyrolschaum-Partikel bestehen aus polymerisiertem Styrol mit Zusatz eines Treibmittels. Die Polystyrolschaum-Partikel werden zunächst mit Hilfe von Wasserdampf vorgeschäumt, wobei sie sich um das 20- bis 100-fache ihres ursprünglichen Volumens aufblähen und im Inneren eine geschlossenzellige Struktur bilden. In einem zweiten Arbeitsgang werden die vorgeschäumten Polystyrolschaum-Partikel dann in einer Form unter nochmaliger Einwirkung von Wasserdampf zu Blöcken, Platten oder anderen Formkörpern "verschweißt". Danach können die Formkörper noch weiteren Bearbeitungen unterworfen werden, beispielsweise indem Blöcke zu Platten zerschnitten werden und die Kanten der Platten bearbeitet werden, indem sie Nuten oder dergleichen erhalten.

Eine der wichtigsten Eigenschaften beim Einsatz von Polystyrol-Hartschaum für Dämmzwecke beruht darauf, daß die geschlossenzellige Struktur des Polystyrol-Hartschaums nur zu wenigen Prozenten aus festem Polystyrol und überwiegend aus eingeschlossener Luft besteht, welche zu den guten Dämmeigenschaften des Polystyrol-Hartschaums führt. Es ergibt sich eine sehr geringe Wärmeleitfähigkeit, die dem Polystyrol-Hartschaum seine gute Eignung zur Verringerung von Wärmeverlusten (Wärmedämmung) und Wärmeeinwirkungen (Kältedämmung) verleiht. Die Wärmeleitfähigkeit hängt dabei von der Rohdichte des Polystyrol-Hartschaums ab. Diese Rohdichte wird durch den Aufschäumungsgrad der Polystyrol-Partikel bestimmt. Erstaunlicherweise beeinflußt die Rohdichte des Polystyrol-Hartschaums die Wärmeleitfähigkeit nicht linear, sondern derart, daß die Wärmeleitfähigkeit bei einer mittleren Rohdichte von etwa 40 kg/m³ durch ein Minimum geht und sowohl zu höheren als auch zu geringeren Rohdichten ansteigt.

Für Bauzwecke werden normalerweise quaderförmige Platten aus Polystyrol-Hartschaum verarbeitet. Für besondere Anwendungen können auch andere Formkörper zum Einsatz kommen. Die Formkörper werden dem Verarbeiter je nach dem beabsichtigten Verbindungszweck üblicherweise in Rohdichten angeboten, die beispielsweise 20 kg/m³ oder 30 kg/m³ betragen. Dem entspricht eine Wärmeleitfähigkeit von 40 bis 35 mW/m · K.

Seit einiger Zeit wird angestrebt, mit einem möglichst geringen Polystyrol-Einsatz ein möglichst optimales Ergebnis zu erzielen, was dazu geführt hat, daß auch Polystyrol-Hartschaum mit einer Rohdichte unterhalb von 20 kg/m³ in Betracht gezogen wird. Ein derart leichter Polystyrol-Hartschaum besitzt jedoch eine Wärmeleitfähigkeit von mehr als 45 mW/m · K. Ein die Wärmeleitfähigkeit von Ruß in Polystyrolschaum vermindernder Effekt ist aus dem Stand der Technik (EP-A-372 343) bekannt. Allerdings weist der Polystyrolschaum Rohdichten von über 30 kg/m³ auf.

Mit der Erfindung soll nunmehr ein Formkörper aus expandiertem Polystyrol-Hartschaum zur Verfügung gestellt werden, der eine verminderte Wärmleitfähigkeit aufweist, die bei Rohdichten unterhalb von 20 kg/m³ befriedigend geringe Werte besitzt.

Der zur Lösung dieser Aufgabe dienende Formkörper weist die Merkmale des Anspruchs 1 auf. Die Erfindung ist das konsequente Ergebnis der Überlegung, daß der Wiederanstieg der Wärmeleitfähigkeitswerte bei abnehmenden Rohdichten auf einen zunehmenden Einfluß der Wärmestrahlung, und zwar insbesondere der Wärmestrahlung im Infrarotbereich, zurückgeführt werden kann. Das ist dadurch bedingt, daß die Wandungen der Polystyrol-Zellen mit abnehmender Rohdichte dünner (transparenter) und dadurch strahlungsdurchlässiger werden. Dem wirkt die Erfindung entgegen, indem die Strahlungsdurchlässigkeit der Wandungen der Polystyrol-Zellen durch das dem Polystyrol-Hartschaum bzw. Polystyrol-Partikelschaum als Additiv hinzugegebene athermane Material verringert wird. Unter dem Begriff "atherman" werden dabei solche Materialien verstanden, die Wärme, und zwar insbesondere Infrarotstrahlung, absorbieren.

Die erfindungsgemäße Zugabe von athermanen Materialien zum Polystyrol-Hartschaum führt bei Polystyrol-Hartschaum bzw. Polystyrol-Partikelschaum mit einer Dichte von weniger als 20 kg/m³ zu einer Verringerung der Wärmeleitfähigkeitswerte.

Das athermane Material wird vorzugsweise auf die vorgeschäumten Polystyrolschaum-Partikel, insbesondere Polystyrolschaum-Perlen, aufgebracht. Das kann dadurch geschehen, daß das athermane Material auf der Oberfläche der Polystyrolschaum-Perlen angelagert wird, indem diese außenseitig mit dem athermanen Material beschichtet oder benetzt werden. Erst anschließend findet eine Verschweißung der mit dem athermanen Material versehenen und vorgeschäumten Polystyrolschaum-Perlen zum Formkörper statt. Andererseits ist es aber auch denkbar, das athermane Material dem ungeschäumten Polystyrol zuzuführen. Dieses kann dadurch geschehen, daß das athermane Material als Additiv in das noch nicht aufgeschäumte Polystyrol-Granulat eingebettet wird. Dieses Einbetten des athermanen Materials in das noch nicht aufgeschäumte Polystyrol kann auch zusammen mit anderen Additiven und/oder Treibmitteln erfolgen.

Die Menge an athermanem Material muß ausreichend sein, um die beabsichtigte Wirkung zu gewährleisten, soll aber nicht so hoch sein, daß andere Eigenschaften des Polystyrol-Hartschaums in unerwünschter Weise beeinträchtigt werden können, beispielsweise dadurch, daß das Verschweißen der Perlen zu einem festen Formkörper behindert wird. Der Gehalt an athermanem Material kann beim Einbringen in das noch nicht aufgeschäumte Polystyrol-Granulat im allgemeinen etwas höher liegen als bei der Zugabe erst vor dem Verschweißen, weil dann die Gefahr, daß auf der Außenseite der Perlen befindliches Material das Verschweißen behindert, nicht so groß ist. Im allgemeinen hat sich in der Praxis gezeigt, daß eine Hinzugabe von athermanem Material mit einem Anteil von 0,5 bis 5 Gew.-% (bezogen auf den fertigen Formkörper) zu den gewünschten Wirkungen führt. In Ausnahmefällen, nämlich bei bestimmten athermanen Materialien, kann der Anteil über 5 Gew.-% liegen.

Als athermane Materialien werden Infrarotstrahlen absorbierende Materialien angesehen. Hierbei kann es sich um Metalloxid (zum Beispiel Fe₂O₃ oder Al₂O₃), Nichtmetalloxid (zum Beispiel SiO₂), Metallpulver, Aluminiumpulver, Kohlenstoff (zum Beispiel Ruß, Graphit, Diamant) oder organische Farbstoffe bzw. Farbstoffpigmente handeln. Als organische Farbstoffe kommen insbesondere solche in Betracht, die im Infrarotbereich ein absorbierendes Verhalten zeigen, beispielsweise rote Farbstoffe. Die vorstehend genannten Materialien können sowohl jeweils allein als auch in Kombination, d. h. in Form einer Mischung aus mehreren Materialien, Verwendung finden.

Im Falle einer Zugabe des athermanen Materials vor dem Verschweißen hat sich in der Praxis gezeigt, daß mit Ruß in einer Menge von bis zu 5 Gew.-%, bevorzugt in einer Menge von 0,5 bis 2 Gew.-%, jeweils bezogen auf den fertigen Formkörper, gute Ergebnisse erreicht werden können. Bei schwarzem Eisenoxid liegt die zuzugebende Menge zweckmäßigerweise im Bereich bis zu 10 Gew.-%. Graphit kann in größeren Mengen bis zu 50 Gew.-% dem noch ungeschäumten Polystyrol zugemischt werden, da Graphit die Verschweißung nicht so stark behindert wie andere Materialien. Allerdings ist Graphit ein recht kostenintensives Material, so daß bevorzugt Mischungen aus Graphit/Ruß, Graphit/Eisenoxid oder Graphit/Ruß/Eisenoxid als sehr interessant erscheinen.

Nachfolgend wird die Erfindung anhand eines Ausführungsbeispiels näher erläutert.

Dieses Beispiel veranschaulicht die Zugabe von Ruß als athermanes Material vor dem Verschweißen der vorgeschäumten (expandierten) Polystyrol-Perlen. Die verschweißten Polystyrol-Perlen wurden außen mit Ruß versehen, vorzugsweise die Mantelflächen der Polystyrol-Perlen mit Ruß benetzt bzw. beschichtet, wobei mit einem Ruß-Anteil von 2 Gew.-% gearbeitet wurde. Aus den so vorbehandelten Polystyrol-Perlen wurden quaderförmige Formkörper mit einer Rohdichte von 10 kg/m³ hergestellt. Ein gleicher Formkörper wurde in herkömmlicher Weise ohne Zugabe von Ruß hergestellt. Die Formkörper wurden anschließend auf ihre Eigenschaften untersucht und die ermittelten Werte verglichen.

Es wurde festgestellt, daß die ohne Ruß hergestellten Formkörper eine Wärmeleitfähigkeit von etwa 50 mH/m · K aufwiesen, während die Werte der mit Ruß hergestellten Formkörper bei etwa 35 mH/m · K und damit im Bereich der Wärmeleitfähigkeit lagen, die sonst nur mit höheren Rohgewichten erreichbar sind. In allen übrigen Eigenschaften (mit Ausnahme der Farbe) wurden praktisch keine Unterschiede zwischen den mit und ohne Ruß hergestellten Formkörpern festgestellt.

Die Farbe der mit Ruß hergestellten Formkörper war grau, was als Qualitätshinweis für die erreichte Verminderung der Wärmeleitfähigkeit angesehen werden kann.

## Patentansprüche

1. Formkörper aus Polystyrol-Partikelschaum und einem athermanen Material, wobei der Polystyrol-Partikelschaum eine Dichte von weniger als 20 kg/m³ aufweist und das athermane Material infrarotstrahlenabsorbierend ist.

2. Formkörper nach Anspruch 1, dadurch gekennzeichnet, daß das athermane Material in den Polystyrol-Partikelschaum eingebettet ist.

3. Formkörper nach Anspruch 1, dadurch gekennzeichnet, daß der Anteil des athermanen Materials 0,5 bis 5 Gew.-% des Polystyrol-Partikelschaums beträgt.

4. Formkörper nach einem der vorhergehenden Ansprüche, dadurch gekennzeichnet, daß das athermane Material Ruß ist.

5. Formkörper nach einem der vorhergehenden Ansprüche, dadurch gekennzeichnet, daß das athermane Material Graphit ist.

6. Formkörper nach einem der vorhergehenden Ansprüche, dadurch gekennzeichnet, daß das athermane Material Aluminiumpulver ist.

7. Formkörper nach einem der vorhergehenden Ansprüche, dadurch gekennzeichnet, daß das athermane Material eine Mischung aus Ruß, Graphit und oder Aluminiumpulver ist.

8. Verfahren zur Herstellung von zu Dämmzwecken dienenden Formkörpern aus Polystyrol-Partikelschaum und Infrarotstrahlen absorbierendem athermanen Material, wobei auf vorgeschäumte Polystyrol-Perlen durch außenseitige Beschichtung oder Benetzung das athermane Material aufgebracht wird.

9. Verfahren zur Herstellung von zu Dämmzwecken dienenden Formkörpern aus Polystyrol-Partikelschaum und Infrarotstrahlen absorbierendem athermanen Material, wobei in das noch nicht aufgeschäumte Granulat zur Bildung des Polystyrol-Partikelschaums das athermane Material als Additiv eingebettet wird.

10. Verfahren nach Anspruch 9, dadurch gekennzeichnet, daß das athermane Material zusammen mit einem Treibmittel in das noch nicht aufgeschäumte Polystyrol-Granulat eingebettet wird.

## Claims

1. Moulding comprising expanded polystyrene foam and an athermanous material, where the expanded polystyrene foam has a density of less than 20 kg/m³ and the athermanous material absorbs infrared radiation.

2. Moulding according to Claim 1, characterized in that the athermanous material is embedded in the expanded polystyrene foam.

3. Moulding according to Claim 1, characterized in that the proportion of the athermanous material is from 0.5 to 5% by weight of the expanded polystyrene foam.

4. Moulding according to any of the preceding claims, characterized in that the athermanous material is carbon black.

5. Moulding according to any of the preceding claims, characterized in that the athermanous material is graphite.

6. Moulding according to any of the preceding claims, characterized in that the athermanous material is aluminium powder.

7. Moulding according to any of the preceding claims, characterized in that the athermanous material is a mixture of carbon black, graphite and/or aluminium powder.

8. Process for producing mouldings which comprise expanded polystyrene foam and infrared-absorbing athermanous material and serve as insulation, where the athermanous material is applied to prefoamed polystyrene beads by external coating or wetting.

9. Process for producing mouldings which comprise expanded polystyrene foam and infrared-absorbing athermanous material and serve as insulation, where the athermanous material is embedded as additive in the not yet foamed granules for forming the expanded polystyrene foam.

10. Process according to Claim 9, characterized in that the athermanous material together with a blowing agent is embedded in the not yet foamed polystyrene granules.

## Revendications

1. Pièce moulée en mousse de particules de polystyrène et en une matière athermane, la mousse de particules de polystyrène présentant une densité inférieure à 20 kg/m³ et la matière athermane absorbant les rayons infrarouges.

2. Pièce moulée selon la revendication 1, caractérisée en ce que la matière athermane est intégrée dans la mousse de particules de polystyrène.

3. Pièce moulée selon la revendication 1, caractérisée en ce que la proportion de matière athermane représente 0,5 à 5 % en poids de la mousse de particules de polystyrène.

4. Pièce moulée selon une des revendications précédentes, caractérisée en ce que la matière athermane est du noir de carbone.

5. Pièce moulée selon une des revendications précédentes, caractérisée en ce que la matière athermane est du graphite.

6. Pièce moulée selon une des revendications précédentes, caractérisée en ce que la matière athermane est de la poudre d'aluminium.

7. Pièce moulée selon une des revendications précédentes, caractérisée en ce que la matière athermane est un mélange de noir de carbone, de graphite et ou de poudre d'aluminium.

8. Procédé de fabrication de pièces moulées servant à des fins d'isolation en mousse de particules de polystyrène et en matière athermane absorbant les rayons infrarouges, la matière athermane étant appliquée sous la forme d'un revêtement extérieur ou par imprégnation sur les perles de polystyrène que l'on a préalablement fait mousser.

9. Procédé de fabrication de pièces moulées servant à des fins d'isolation en mousse de particules de polystyrène et en matière athermane absorbant les rayons infrarouges, la matière athermane étant intégrée comme additif dans le granulat que l'on n'a pas encore fait mousser et qui sert à la formation de la mousse de particules de polystyrène.

10. Procédé selon la revendication 9, caractérisé en ce que la matière athermane est intégrée avec un agent moussant dans le granulat de polystyrène que l'on n'a pas encore fait mousser.
